**Europäisches Patentamt**

**European Patent Office**

**Office européen des brevets**

(19)

(11) Veröffentlichungsnummer: **0 241 449**

**B1**

(12) # EUROPÄISCHE PATENTSCHRIFT

(45) Veröffentlichungstag der Patentschrift:
**12.07.89**

(51) Int. Cl.⁴: **B 21 F 27/10**

(21) Anmeldenummer: **87890037.2**

(22) Anmeldetag: **24.02.87**

(54) **Vielpunkt-Widerstandsschweissmaschine.**

(30) Priorität: **02.04.86 AT 859/86**

(43) Veröffentlichungstag der Anmeldung:
**14.10.87 Patentblatt 87/42**

(45) Bekanntmachung des Hinweises auf die Patenterteilung:
**12.07.89 Patentblatt 89/28**

(84) Benannte Vertragsstaaten:
**AT BE CH DE FR GB IT LI**

(56) Entgegenhaltungen:
**AT-B-258 098**
**AT-B-368 414**
**AT-B-2 672 292**
**DE-U-7 535 456**
**FR-A-2 408 407**

(73) Patentinhaber: **EVG Entwicklungs- u. Verwertungs-Gesellschaft m.b.H., Vinzenz- Muchitsch-Strasse 36, A-8011 Graz (AT)**

(72) Erfinder: **Ritter, Josef, Dipl.- Ing Dr., Stenggstrasse 33, A-8043 Graz (AT)**
Erfinder: **Ritter, Gerhard, Dipl.- Ing. Dr., Unterer Plattenweg 47, A-8043 Graz (AT)**
Erfinder: **Ritter, Klaus, Dipl.- Ing., Peterstalstrasse 157, A-8042 Graz (AT)**
Erfinder: **Scherr, Rudolf, Dipl.- Ing, Ziegelstrasse 23, A-8045 Graz (AT)**

(74) Vertreter: **Schütz, Alfred, Dipl.- Ing. Dr. techn., Patentanwälte Dipl.- Ing. Dr.techn. Alfred Schütz Dr. phil. Engelbert Mrazek Dipl.- Ing. Walter Holzer Dipl.- Ing. Otto Pfeifer Fleischmanngasse 9, A-1040 Wien (AT)**

EP 0 241 449 B1

LIBER, STOCKHOLM 1989

## Beschreibung

Die Erfindung betrifft eine Vielpunkt-Widerstandsschweißmaschine zum Herstellen von Gittern, die aus einander rechtwinkelig kreuzenden und an den Kreuzungspunkten miteinander verschweißten Längs- und Querdrähten bestehen, mit zwei Zuführeinrichtungen für die Querdrähte und einer die Querdrähte einzeln aus den Zuführeinrichtungen entnehmenden und in den Schweißbereich zwischen den Elektroden übertragenden Fördereinrichtung.

Eine derartige Maschine ist beispielsweise aus der AT-B-267 292 bekannt. Bei der bekannten Maschine werden die Querdrähte von der Seite her in mit Abstand vor den Schweißelektroden angeordnete Führungen eingeschossen, sodann von mit entsprechend geformten Haken versehenen Transportschienen aus den Einschußführungen herausgehoben und von diesen Schienen in den Bereich zwischen zwei Doppelpunkt-Schweißstrecken in Längsdrahtrichtung bildenden Reihen von Schweißelektroden gefördert. Es werden somit jeweils zwei gleich lange Querdrähte gleichzeitig eingeschossen und auch gleichzeitig an die Schar der Längsdrähte angeschweißt, weshalb eine solche Maschine sehr hohe Produktionsgeschwindigkeiten zuläßt, anderseits auf die Produktion von Gitterbahnen beschränkt ist, bei welchen sich die Querdrähte über die gesamte Gitterbreite erstrecken. Häufig werden jedoch Gitter gefordert, bei welchen dies nicht der Fall ist und beispielsweise beidseits der Längsmittelachse einer Gittermatte auf je einem Drittel der Mattenbreite doppelt so viele Querdrähte vorgesehen werden sollen wie längs der beiden ein Sechstel der Mattenbreite betragenden Mattenränder, oder Gitter, bei welchen über einen Großteil der Mattenbreite, von einem Gitterrand weg betrachtet, doppelt so viele Querdrähte wie am gegenüberliegenden Mattenrand vorgesehen sein sollen.

Die Erfindung befaßt sich deshalb mit der Aufgabe, eine Gitterschweißmaschine der einleitend angegebenen Gattung, also eine Maschine mit zwei Zuführeinrichtungen für Querdrähte, derart auszugestalten, daß mit ihr Querdrähte mit unterschiedlichen Längen in ein und derselben Gitterbahn angeordnet werden können und daß alle Querdrähte, deren Länge geringer als die Gesamtbreite der Gitterbahn ist, bezüglich der Längsmittelachse dieser Gitterbahn in beliebiger Lage angeordnet werden können.

Gelöst wird diese Aufgabe dadurch, daß zumindest eine der beiden Zuführeinrichtungen für die Querdrähte quer zum Vorschubweg der Längsdrahtschar und relativ zu der die Querdrähte in den Schweißbereich übertragenden Fördereinrichtung in einer Führung verschiebbar und feststellbar ausgebildet ist.

Die Querdrähte unterschiedlicher Länge können dabei, wie an sich bekannt, aus getrennten Magazinen entnommen und durch die zugeordneten Zuführeinrichtungen in den Wirkungsbereich der sie zum Schweißbereich übertragenden Fördereinrichtung gebracht werden, oder es können, wie ebenfalls an sich bekannt, geradegerichtete Drähte von einer Maschinenseite her in mit der Fördereinrichtung zusammenwirkende Führungen eingeschoben und nach Bedarf zu Querdrähten gewünschter Länge zugeschnitten werden. Diese beiden Arten von Querdraht-Zuführeinrichtungen können auch miteinander kombiniert werden. Vorzugsweise wird für die bzw. für jede querverstellbare Zuführeinrichtung eine seitliche Drahtzufuhr angewendet, wobei am Eingang der Zuführeinrichtung an dieser eine Schere montiert ist, die nach programmgesteuertem Vorschub eines gewünschten Drahtabschnittes in der Zuführeinrichtung einen programmgesteuerten Scherenschnitt ausführt, so daß die eine bestimmte Sollage in Querrichtung einnehmende Zuführeinrichtung jeweils mit einem Querdraht gewünschter Länge in gewünschter Relativlage bezüglich des Vorschubweges der Längsdrahtschar beschickt wird.

Ein einfaches Ausführungsbeispiel einer erfindungsgemäßen Gitterschweißmaschine mit nur einer Elektrodenreihe wird nun anhand der Zeichnungen näher beschrieben. Es zeigen:

Figur 1 eine Draufsicht auf die Schweißmaschine,
Figur 2 einen Schnitt nach der Linie II - II in Figur 1,
Figur 3 einen Schnitt nach der Linie III - III in Figur 1 und Figur 4 die wesentlichen der in Figur 3 ersichtlichen Teile in größerem Maßstab.

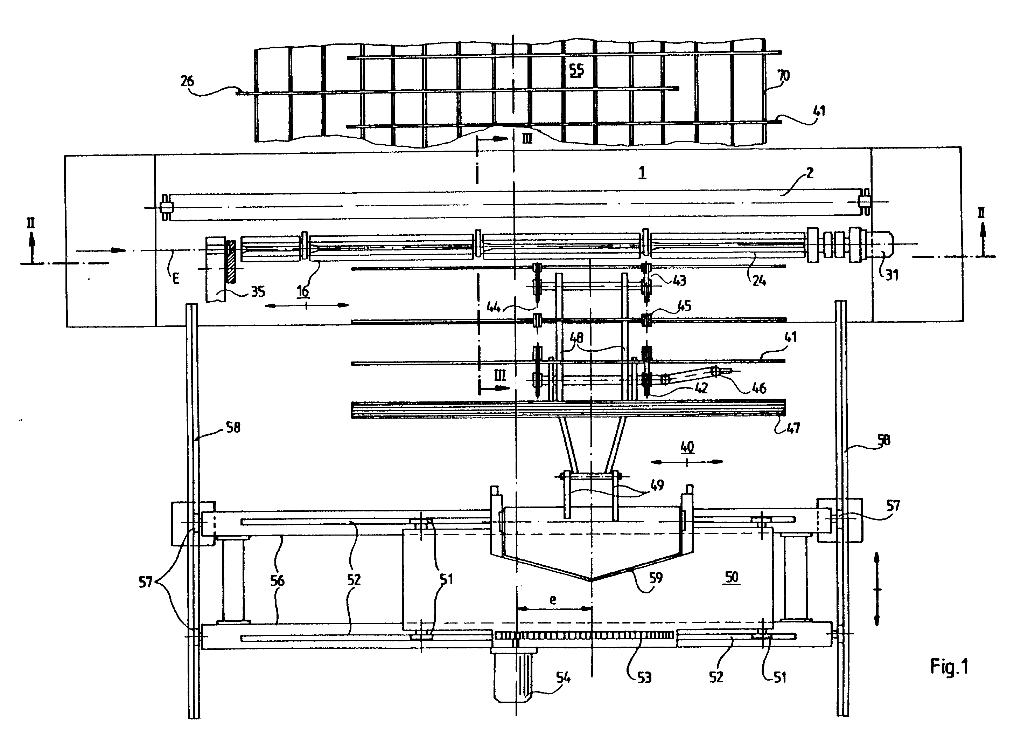

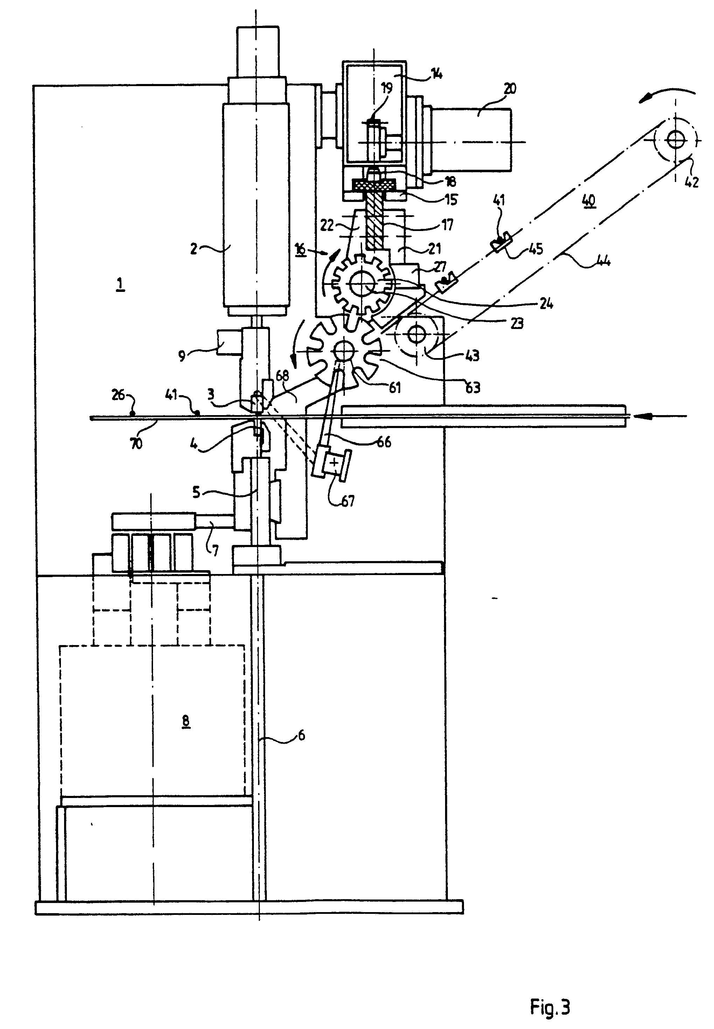

An der Schweißmaschine 1 erkennt man in den Figuren 1 und 3 den Elektrodenbalken 2, der die oberen Elektroden 3 trägt. Der Elektrodenbalken 2 kann auf- und abbewegbar sein und die Elektroden 3 können in ihm federnd abgestützt sein, oder er kann feststehend ausgebildet sein und im Inneren die Elektroden an das Schweißgut anstellende und von diesen wieder abhebende, beispielsweise hydraulische Arbeitszylinder tragen. Die unteren Elektroden 4 sind an einem maschinenfesten Träger 5 abgestützt, welcher seinerseits auf einer quer über die gesamte Breite des Maschinengehäuses verlaufenden Wand 6 ruht, auf welche er den Schweißdruck überträgt.

Über flexible Zuleitungen 7 sind in bekannter Weise die unteren Elektroden 4, abwechselnd gegensinnig gepolt, an die Sekundärwicklungen von Transformatoren 8 angeschlossen. Die oberen Elektroden 3 sind über flexible Zuleitungen 9 in bekannter Weise mit einem nicht dargestellten, sich vorzugsweise über die gesamte Maschinenbreite erstreckenden Ausgleichsleiter verbunden und bilden die passiven Elektroden von in Richtung der Maschinenbreite orientierten Doppelpunkt-Schweißstrecken.

Die beschriebene Anordnung und elektrische Anspeisung der Elektroden ist jedoch nur eine die Anwendbarkeit der Erfindung nicht begrenzende, beispielsweise Ausführungsform. Im Rahmen der Erfindung ist selbstverständlich jede andere gebräuchliche und zweckmäßige Art der Anordnung der Elektroden und deren Versorgung mit Energie, insbesondere unter Bildung von Einzelpunkt-Schweißstrecken, anwendbar.

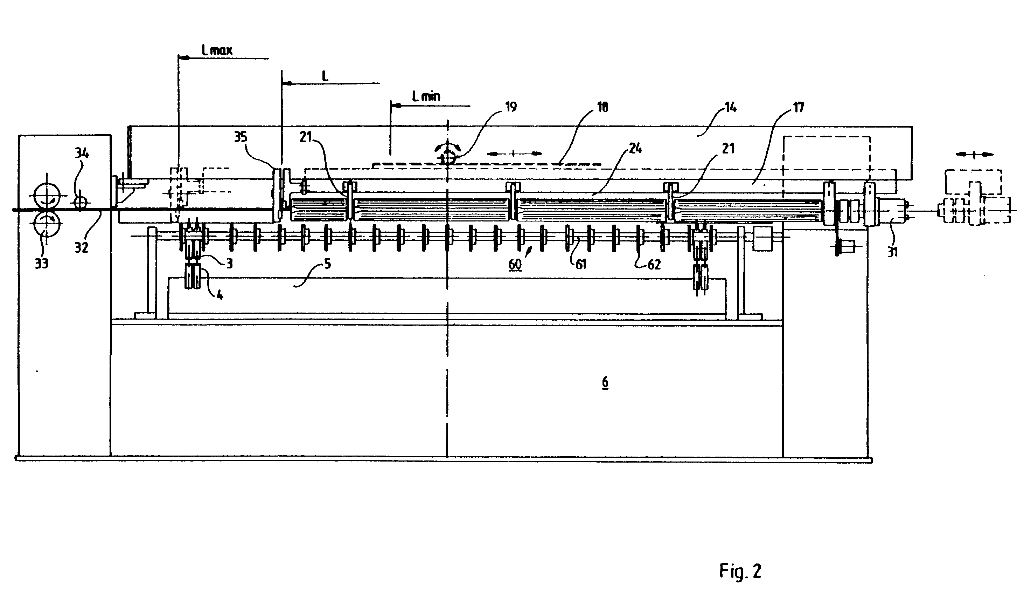

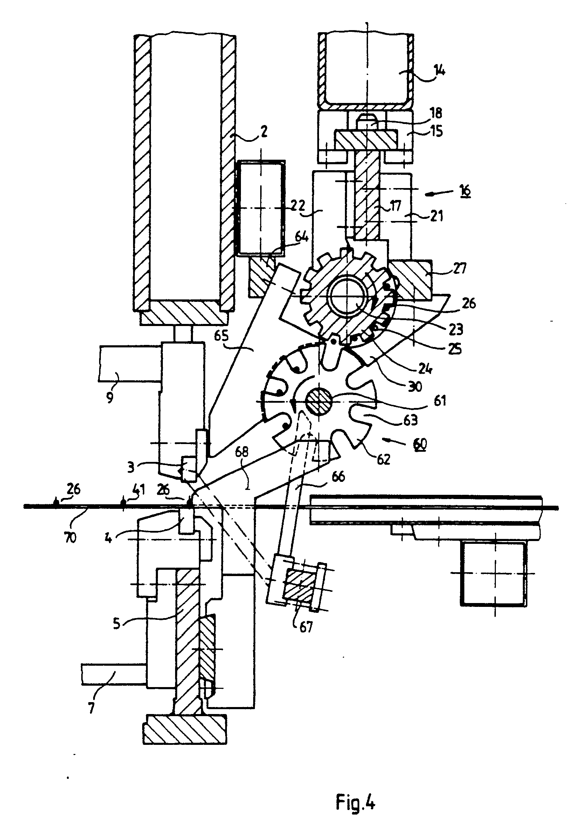

Ein an seinen beiden Enden im Maschinengehäuse befestigter, sich über die gesamte Breite der Maschine erstreckender Balken 14 (Figuren 3 und 4) trägt in einer Führung 15 eine erste Querdraht-Zuführeinrichtung 16. Diese Zuführreinrichtung 16 ist in der Führung 15 mittels eines zweiten, im Querschnitt T-förmigen Balkens 17 aufgehängt, der an seiner Oberseite mit einer Zahnstange 18 verbunden ist. Das Ritzel 19 eines Elektromotors 20, der am Balken 14 angeordnet ist, greift durch eine Durchtrittsöffnung im Boden des Balkens 14 hindurch und kämmt mit der Zahnstange 18. Mittels des Motors 20 und des in die Zahnstange 18 eingreifenden Ritzels 19 kann der Balken 17 und mit ihm die ganze Querdraht-Zuführeinrichtung 16 in der Führung 15 in den Figuren 3 und 4 nach vorn und hinten bzw. in den Figuren 1 und 2 nach rechts und links verschoben werden. Diese Verschiebung erfolgt vorzugsweise unter der Steuerwirkung einer nicht Gegenstand der Erfindung bildenden und deshalb auch nicht dargestellten Programmsteuereinrichtung.

Die Grenzlagen der Verschiebung sind in Figur 2 durch die Pfeile $L_{max}$ bzw. $L_{min}$ angedeutet. Insbesondere die letztere Grenzlage wird durch die Anordnung des Ritzels 19 am Balken 14 bestimmt. In Figur 2 wurde angenommen, daß dieses Ritzel 19 in der Maschinenmitte angeordnet ist; es könnte aber ebensogut auch außermittig, etwa in Figur 2 in Richtung zur rechten Seitenbegrenzung der Maschine versetzt, angeordnet werden, wodurch $L_{min}$ gleichfalls weiter nach rechts verlegt würde.

In Abständen längs des Balkens 17 angeordnete Verbindungsstücke 21 tragen einen Träger 27 (Figuren 3 und 4), längs welchem in kleineren gegenseitigen Abständen angeordnete Führungsleisten 30 befestigt sind. Gegenüber den Verbindungsstücken 21 sind längs des Balkens 17 noch Verbindungsstücke 22 vorgesehen, an deren unteren Enden eine Welle 23 gelagert ist, die in ihren zwischen den Verbindungsstücken 22 liegenden Abschnitten von drehfest mit ihr verbundenen Walzen 24 umgeben ist. Jede Walze 24 ist mit in gleichen Winkelabständen längs ihres Umfanges angeordneten, achsparallelen Nuten 25 versehen, die zur Aufnahme von Gitterquerdrähten 26 dienen. Die in Abständen angeordneten Führungsleisten 30 verschließen die Nuten 25 nach unten hin, um ein vorzeitiges, unerwünschtes Herausfallen der Querdrähte aus den Nuten zu verhindern.

An einem Ende des Balkens 17 ist ein Motor 31 (Figur 1) angeordnet, der drehfest mit der Welle 23 verbunden ist und diese, sobald ein Querdraht 26 aus einer der Nuten 25 entnommen werden soll, programmgesteuert um einen Schritt, entsprechend dem Winkelabstand zweier längs des Walzenumfanges benachbarter Nuten, weiterdreht. Längs der Linie E in Figur 1 wird von der dem Motor 31 gegenüberliegenden Maschinenseite her ein gerader Draht 32 in eine obenliegende Nut 25 der Walzen 24 eingeführt. Zum Zuführen des Drahtes 32 sind am Maschinengehäuse gemäß Figur 2 auf Drehung antreibbare, den Draht mittels Klemmschluß erfassende und programmgesteuerte Zuführrollen 33 sowie eine den zurückgelegten Vorschubweg des Drahtes der Steuervorrichtung meldende Meßrolle 34 vorgesehen. Durch eine im Drahtvorschubweg angeordnete Schere 35 kann jeweils ein Querdraht 26 gewünschter Länge von dem zulaufenden Draht 32 abgetrennt werden. Die Schere 35 ist wie der Motor 31 mitbewegbar am Balken 17 angeordnet.

In dem bereits erwähnten, nicht dargestellten Programmsteuer- und Rechengerät wird die von einem mit dem Ritzel 19 gekoppelten Geber gemeldete Stellung der ersten Querdraht-Zuführreinrichtung 16 mit der in einem Eingabegerät festgehaltenen, gewünschten Querdrahtlänge verglichen, und daraus die erforderliche Vorschubstrecke des Drahtes 32 ermittelt, damit beispielsweise in Figur 2 rechts von der Schere 35 in jeder der Nuten 25 ein Querdraht 26 gewünschter Länge zu liegen kommt.

Eine zweite Querdraht-Zuführreinrichtung 40 wird mit geradegerichteten, abgelängten Querdrähten 41 durchwegs gleicher Länge beschickt. Die Zuführreinrichtung 40 kann den aus der AT-B-368 414 bekannten Aufbau haben. Es genügt daher im vorliegenden Zusammenhang, diese Zuführreinrichtung anhand der schematischen Darstellung in den Figuren 3 und 4 nur so weit zu beschreiben, wie dies zum Verständnis der Erfindung erforderlich ist. Demnach besteht die zweite Zuführreinrichtung 40 im wesentlichen aus um Kettenräder 42 und 43 geschlungenen endlosen Gliederketten 44, welche in gegenseitigen Abständen Aufnahmefächer 45 für Querdrähte 41 tragen. Diese Querdrähte 41 werden in bekannter Weise nahe den oberen, über eine Gelenkwelle 46 programmgesteuert angetriebenen Kettenrädern 41 einzeln, z. B. aus einem nur schematisch angedeuteten Magazin 47, in die Aufnahmefächer 45 eingebracht und mittels der Gliederketten 44 einer Fördereinrichtung 60 zugeführt, welche wahlweise Querdrähte 26 bzw. 41 von im allgemeinen unterschiedlicher Länge und unterschiedlicher Relativlage bezüglich des Vorschubweges der Längsdrahtschar von der ersten Zuführreinrichtung 16 bzw. von der zweiten Zuführreinrichtung 40 aufnimmt.

Die Achsen der Kettenräder 42 und 43 der Zuführreinrichtung 40, das Drahtmagazin 47 und die (nicht dargestellte, weil an sich bekannte) Einrichtung zum Übergeben von Einzeldrähten aus dem Magazin 47 in die Aufnahmefächer 45 werden von zwei Trägern 48 getragen. Die Träger 48 sind mittels eines Gestänges 49 an einem Wagen 50 montiert, der mittels Rollen 51 auf Schienen 52 in Richtung quer zur Schweißmaschine verschiebbar ist. Diese Verschiebung, welche der Positionierung der abgelängten Querdrähte 41 in gewünschter Lage innerhalb des herzustellenden Gitters 55, beispielsweise in einer um eine Strecke e seitlich gegen die Längsmittelachse des Gitters 55 versetzte Lage dient, erfolgt mit Hilfe eines mit einer Zahnstange 53 zusammenwirkenden, gegebenenfalls programmgesteuerten Elektromotors 54. Eine die Querschienen 52 tragende Plattform 56, an der auch ein Aufnahmebehälter 59 für einen das Magazin 47 speisenden Drahtvorrat angeordnet ist, ist mittels Rollen 57 auf Längsschienen 58 in Richtung zur Zuführeinrichtung 16 bzw. von dieser weg verschiebbar. Diese Verschiebbarkeit dient aber lediglich dazu, etwa notwendige Wartungsarbeiten an den beiden Zuführreinrichtungen 16 und 40 zu erleichtern.

Quer über die Breite der Schweißmaschine erstreckt sich eine unverschiebbar angeordnete Fördereinrichtung 60. Die Fördereinrichtung 60 besteht aus einer im Schweißtakt der Maschine antreibbaren Welle 61, längs welcher in Abständen Scheiben 62 angeordnet sind. Die Scheiben 62 tragen längs ihrer Umfänge in gleichen Winkelabständen in zur Welle 61 parallelen Fluchten Schlitze 63 zur Aufnahme jeweils eines Querdrahtes, u.zw. entweder eines Querdrahtes 26 aus der Zuführeinrichtung 16 oder eines Querdrahtes 41 aus der Zuführeinrichtung 40. Die Wahl, ob ein Querdraht 26 oder ein Querdraht 41 in einen der Schlitze 63 gefördert wird, erfolgt programmgesteuert mittels des Antriebes der Welle 23 bzw. der Gliederketten 44.

In Abständen längs eines Trägers 64 sind Abdeckbleche 65 vorgesehen, welche ein vorzeitiges Herausfallen der Querdrähte aus den Schlitzen 63 verhindern. In Abständen angeordnete, in die Zwischenräume zwischen den Scheiben 62 eingreifende Finger 66 sind an einem sich quer über die Maschinenbreite erstreckenden, um seine Achse drehbaren Balken 67 angeordnet und fördern mittels einer Schwenkbewegung im Takt der Schweißmaschine die Drähte aus dem untersten der Schlitze 63 längs Führungen 68 in den Bereich zwischen den Schweißelektroden 3, 4 und legen sie dort auf die Längsdrähte 70 ab.

Die Welle 61 wird im Arbeitstakt der Schweißmaschine, d.h. nach jedem Schweißvorgang, um einen Winkelbetrag, der gleich dem Zentriwinkel zwischen zwei benachbarten Schlitzen 63 ist, weitergeschaltet.

Wird die Welle 23 jeweils in der Stillstandszeit der Welle 61 während eines Schweißvorganges gleichfalls um einen Schritt, der gleich dem Winkelabstand zweier benachbarter Nuten 25 längs der Walzen 24 ist, weitergedreht, dann gelangt bei jeder dieser Drehbewegungen ein Querdraht 26 aus der untersten, nicht mehr von den Führungsleisten 30 abgedeckten Nut der Walzen 24 in eine Flucht freier Schlitze 63 und die Schweißmaschine wird ausschließlich mit Drähten aus der Zuführeinrichtung 16 beschickt.

In gleicher Weise kann die Schweißmaschine ausschließlich mit abgelängten Querdrähten 41 aus der Zuführeinrichtung 40 beschickt werden, wenn während jeder Stillstandszeit der Welle 61 die Gliederketten 44 um einen Schritt, der gleich dem Abstand zweier aufeinanderfolgender Aufnahmefächer 45 ist, weiterbewegt werden und so jeweils einen Querdraht 41 aus dem untersten Aufnahmefach 45 an die Schlitze 63 der Scheiben 62 übergeben.

Weiters können beispielsweise auch Gitter erzeugt werden, in welchen Stäbe 26 und 41 in stetem Wechsel angeordnet sind. In diesem Falle werden nach jedem zweiten Schaltschritt der Welle 61 die Welle 23 und die Gliederketten 44 gleichzeitig um einen Schritt weitergeschaltet und übergeben jeweils einen Querdraht in eine von zwei benachbarten Fluchten von Schlitzen 63. Die Übergabe von Drähten aus den Zuführreinrichtungen 16 bzw. 40 an die Fördereinrichtung 60 kann darüber hinaus in beliebiger Reihenfolge von einer Programmsteuereinrichtung bewirkt werden.

Ferner kann die Länge der der Zuführreinrichtung 16 jeweils zugeführten und von der Schere 35 vom zulaufenden Draht 32 abgelängten Querdrähte 26 ebenso in jedem einzelnen Falle von der Programmsteuereinrichtung bestimmt werden, wie die jeweilige Lage der Zuführreinrichtungen 16 und 40 bezüglich der Schweißmaschinenachse.

Zufolge dieser Ausgestaltung der Maschine können mit dieser Gitter erzeugt werden, deren Querdrähte sich innerhalb ein und derselben Gitterbahn nicht nur hinsichtlich ihrer Länge, sondern auch hinsichtlich ihrer Lage bezüglich der Längsmittelachse der Gitterbahn unterscheiden.

Das beschriebene Ausführungsbeispiel läßt im Rahmen der Erfindung verschiedene Abwandlungen zu. So kann die Erfindung auch bei Gitterschweißmaschinen Anwendung finden, die ähnlich wie die Maschine nach der einleitend zitierten AT-B-267 292 zwei parallele Schweißelektrodenreihen aufweisen. Zu diesen beiden Elektrodenreihen, die im Rahmen der Erfindung zweckmäßig nicht Doppelpunkt-, sondern Einzelpunkt-Schweißstrecken bilden, werden dann jeweils gleichzeitig mittels Transportschienen zwei zugeordnete Querdrähte wählbarer unterschiedlicher Länge gefördert, wobei zumindest einer der Querdrähte den Transportschienen über eine quer zum Vorschubweg der Längsdrahtschar verschiebbare, entweder von der Seite her mit einem abzulängenden Draht versorgte Zuführeinrichtung, ähnlich der beschriebenen Zuführreinrichtung 16, oder in Längsdrahtrichtung aus einem Magazin versorgte Zuführeinrichtung, ähnlich der beschriebenen Zuführreinrichtung 40, programmgesteuert zugeführt wird. Auch hinsichtlich der konstruktiven Ausbildung der Zuführreinrichtungen und der Fördereinrichtung bestehen außer den beschriebenen Beispielen zahlreiche andere Möglichkeiten.

**Patentansprüche**

1. Vielpunkt-Widerstandsschweißmaschne zum Herstellen von Gittern, die aus einander rechtwinkelig kreuzenden und an den Kreuzungspunkten miteinander verschweißten Längs- und Querdrähten bestehen, mit zwei Zuführeinrichtungen für die Querdrähte und einer die Querdrähte aus den Zuführeinrichtungen übernehmenden und in den Schweißbereich zwischen den Schweißelektroden übertragenden Fördereinrichtung, dadurch gekennzeichnet, daß zumindest eine der beiden Zuführeinrichtungen (16; 40) für die Querdrähte (26; 41) quer zum Vorschubweg der Längsdrahtschar und relativ zu der die Querdrähte in den Schweißbereich übertragenden Fördereinrichtung (60) in einer Führung (15, 17; 51, 52) verschiebbar und feststellbar ausgebildet ist.

2. Schweißmaschine nach Anspruch 1, dadurch gekennzeichnet, daß zumindest eine (16) der beiden Zuführeinrichtungen (16, 40) aus quer zum Vorschubweg der Längsdrahtschar verschiebbaren und aufeinander eingefluchteten Aufnahmeorganen (24, 25) für einen in Querrichtung der Maschine programmgesteuert vorschiebbaren Draht (32) besteht, von dem mittels einer an der Einlaufseite der Zuführeinrichtung (16) montierten Schere (35) jeweils programmgesteuert ein Querdraht (26) gewünschter Länge abtrennbar ist, der sodann programmgesteuert der Fördereinrichtung (60) zuführbar ist.

3. Schweißmaschine nach Anspruch 1 oder 2, dadurch gekennzeichnet, daß zumindest eine (40) der beiden Zuführeinrichtungen (16, 40) aus einem quer zum Vorschubweg der Längsdrahtschar verschiebbaren, abgelängte Querdrähte (41) aus einem Magazin (47) in Längsdrahtrichtung aufnehmenden Organ (44, 45) besteht, von dem die Querdrähte programmgesteuert der Fördereinrichtung (60) zuführbar sind.

4. Schweißmaschine nach Anspruch 2, gekennzeichnet durch einen querverschiebbar gelagerten Träger (17), an dem unverschiebbar aber drehbar eine die Zuführeinrichtung (16) bildende Reihe von Walzen (24) gelagert ist, längs deren Umfängen fluchtende, achsparallele Nuten (25) zur Aufnahme einzelner Querdrähte (26) vorgesehen sind, wobei mit dieser Zuführeinrichtung (16) zusammenwirkende Vorschubrollen (33) zum Abziehen eines Drahtes (32) von einem Drahtvorrat und zum Einschieben des Vorderendes des Drahtes (32) in eine der Nuten (25) der Walzen (24), eine Meßeinrichtung (34) zum Messen der Länge des vorgeschobenen Drahtes sowie nahe dem Einlaufende der Nuten (25) eine am Träger (17) angeordnete Schere (35) zum Abtrennen des in eine Nut (25) eingeschobenen, als Querdraht (26) dienenden Drahtabschnittes vom nachfolgenden Draht (32) vorgesehen ist.

5. Schweißmaschine nach Anspruch 3, dadurch gekennzeichnet, daß die Zuführeinrichtung (40) zumindest zwei parallele Gliederketten (44) mit in Abständen längs der Gliederketten (44) angeordneten Fächern (45) zur Aufnahme von einzeln einem Magazin (47) entnommenen abgelängten Querdrähten (41) und zu deren Weitergabe an die Fördereinrichtung (60) aufweist.

6. Schweißmaschine nach einem der Ansprüche 1 bis 5, dadurch gekennzeichnet, daß die Fördereinrichtung (60) aus einer intermittierend im Schweißtakt auf Drehung antreibbaren Welle (61) gebildet ist, mit welcher in Abständen parallele Scheiben (62) drehfest verbunden sind, welche längs ihrer Umfänge gleichabständig in zur Welle (61) parallelen Fluchten angeordnete Schlitze (63) zur programmgesteuerten Aufnahme eines Querdrahtes (26; 41) aus jeweils einer der beiden Zuführeinrichtungen (16; 40) aufweisen und zum taktweisen Fördern der Querdrähte (26; 41) in eine der Schweißelektrodenreihe (3, 4) benachbarte Stellung dienen.

7. Schweißmaschine nach Anspruch 4, dadurch gekennzeichnet, daß Einrichtungen (66, 67) zur Entnahme des in der den Schweißelektroden benachbarten Stellung angelangten Querdrahtes (26; 41) aus den Schlitzen (63) der Fördereinrichtung (60) und zum Führen derselben in den Zwischenraum zwischen den Elektroden (3, 4) der Schweißmaschine vorgesehen sind.


**Revendications**

1. Machine à souder par résistance multipoints pour la fabricition de grillages, constitués par des fils longitudinaux et transversaux se croisant à angle droit entre eux et soudés entre eux sur leurs points de croisement, machine comportant deux dispositifs d'amenée pour les fils transversaux et un dispositif transporteur recevant les fils transversaux provenant des dispositifs d'ameée et les transférant dans la zone de soudage entre las électrodes de soudage, caractérisée en ce qu'au moins l'un des deux dispositifs d'amenée (16; 40) pour les fils transversaux (26; 41) est conçu de'façon mobile et réglable transversalement au trajet d'avancement de la nappe de fils longitudinaux et relativement par rapport au dispositif transportaur (60) qui amène dans un guidage (15, 17; 51, 52) les fils transversaux jusque dans la zone de soudage.

2. Machine à souder salon la revendication 1, caractérisée en ce qu'nu moins l'un (16) des deux dispositifs d'amenée (16, 40) est constitué par des organes de réception (24, 25) alignés entre eux et déplaçables transversalement par rapport au trajet d'avancement de la nappe de fils transversaux pour un fil (32) déplaçable par commande programmée dans la direction transversale de la machine, à partir duquel un fil transversal (26) de longueur souhaitée peut être séparé respectivement par commande programmée au moyen d'une cisaille (35) montée sur le côté d'introduction du dispositif d'amenée (16), lequel fil transversal peut être amené alors par commande programmée au dispositif transporteur (60).

3. Machine à souder selon la revendication 1 ou 2, caractérisée en ce qu'au moins l'un (40) des deux dispositifs d'amenée (16, 40) est constitué par un organe (41, 45) déplaçable transversalement par rapport au trajet d'avancement de la nappe de fils longitudinaux, organe recevant les fils transversaux (41) coupés à longueur à partir d'un chargeur (47) dans la direction des fils longitudinaux, organe à partir duquel les fils transversaux peuvent être amenés au dispositif transporteur (60) par commande programmable.

4. Machine à souder salon la revendication 2, caractérisée par un support (17) monté de façon déplaçable transversalement, sur lequel est montée de façon non déplaçable mais tournante une série de cylindres (24) formant le dispositif d'amenée (16) le long de la circonférence desquels sont prévues des rainures (25) en alignement, parallèles à l'axe pour la réception des différents fils transversaux, dans l'utilisation avec ce dispositif d'amenée (16), étant prévus des rouleaux d'avance (33) coopérant pour l'extraction d'un fil (32) depuis un stock de fil, et pour l'introduction de l'extrémité avant du fil (32) dans l'une des rainures (25) des cylindres (24), un dispositif de mesure (34) destiné à mesurer la longueur du fil amené ainsi qu'à proximité de l'extrémité d'entrée des rainures (27), une cisaille (35) disposée sur le support (17), destinée à sectionner le tronçon de fil, servant de fil transversal (26), du fil suivant (32), tronçon introduit dans une rainure (25).

5. Maschine à souder selon la revendication 3, caractérisée en ce que le dispositif d'amenée (40) comporte au moins deux chaînes à maillons (44) parallèles, avec des compartiments (45) disposés à une certaine distance entre eux le long des chaînes à maillons (44) pour la réception de fils transversaux (41) découpés à longueur et prélevés individuellement d'un chargeur (47) et pour leur transfert sur le dispositif transporteur (60).

6. Machine à souder selon l'une des revendications 1 à 5, caractérisée en ce que le dispositif transporteur (60) est constitué par un arbre (61) pouvant être entraîné en rotation de façon intermittente en fonction de la cadence de soudage, dans lequel sont reliés, de façon fixe en rotation à certaines distances entre eux, des disques parallèles (62), qui présentent le long de leur circonférence de façon équidistante des fentes (63) en alignement parallèle par rapport à l'arbre (61) pour la réception commandée par programme d'un fil transversal (26; 41) à partir respectivement de l'un des deux dispositifs d'amenée (16; 40) et servent à l'acheminement cadencé des fils transversaux (26; 41) sur une position contiguë à la série d'électrodes de soudure (3, 4).

7. Machine à souder selon la revendication 4, caractérisée en ce que des dispositifs (66, 67) sont prévus pour le prélèvement du fil transversal (26; 41) arrivé dans la position contiguë aux électrodes de soudage à partir des fentes (63) du dispositif transporteur (60) et pour le guidage de celui-ci dans l'espace intermédiaire situé entre les électrodes (3, 4) de la machine à souder.

**Claims**

I. Multi-spot resistance-welding machine for manufacturing grids which consist of longitudinal and crosswires which cross one another at right-angles and are welded to one another at the points of intersection, having two feed devices for the crosswires and a delivery device which taxes the crosswires from the feed devices and transfers them into the welding area between the welding electrodes, characterized in that at least one of the two feed devices (16; 40) for the crosswires (26; 41) is designed such that it can be displaced and fixed in a guide (15, 17; 51, 52) transversely to the feed path of the group of longitudinal wires and relative to the delivery device (60) transferring the crosswires into the welding area.

2. Welding machine according to claim 1, characterized in that at least one (16) of the two feed devices (16, 40) consists of receiving members (24, 25), which can be displaced transversely to the feed path of the group of longitudinal wires and are in alignment with one another, for a wire (32) which can be fed in program-controlled manner in the transverse direction of the machine, from which wire (32) a crosswire (26) of desired length can be cut off in each case in program-controlled manner by means of shears (35) mounted on the entrance side of the feed device (16), which crosswire (26) can then be fed in program-controlled manner to the delivery device (60).

3. Welding machine according to claim 1 or 2, characterized in that at least one (40) of the two feed devices (16, 40) consists of a member (44, 45) which can be displaced transversely to the feed path of the group of longitudinal wires, receives cut-to-length crosswires (41) from a magazine (47) in the direction of the longitudinal wires and from which crosswires can be fed in program-controlled manner to the delivery device (60).

4. Welding machine according to claim 2, characterized by a bearer (17) mounted in transversely displaceable manner, on which a row of rollers (24), which forms the feed device (16), is non-displaceably but rotatably mounted, along the peripheries of which rollers (24) aligned grooves (25) parallel to the axis are provided for receiving individual crosswires (26), with feed rollers (33), which interact with this feed device (16), for removing a wire (32) from a wire supply and for pushing the front end of the wire (32) into one of the grooves (25) of the rollers (24), a measuring device (34) for measuring the length of the fed wire and also, next to the entry end of the grooves (25), shears (35), arranged on the bearer (17), for cutting off from the following wire (32) the wire section which is pushed into a groove (25) and serves as a crosswire (26) being provided.

5. Welding machine according to claim 3, characterized in that the feed device (40) has at least two parallel link chains (44) with receptacles (45), arranged at intervals along the link chains (44), for receiving cut-to-length cross-wires (41) individually removed from a magazine (47) and for transferring them to the delivery device (60).

6. Welding machine according to one of claims 1 to 5, characterized in that the delivery device (60) is formed by a shaft (61) which can be driven intermittently in rotation in the welding cycle and to which parallel-spaced discs (62) are connected non-rotationally which, along their peripheries have slots (63), arranged equispaced in rows parallel to the shaft (61), for the program-controlled reception of a crosswire (26; 41) from in each case one of the two feed devices (16; 40) and for delivering in cycles the crosswires (26; 41) into a position adjacent to the row (3, 4) of welding electrodes.

7. Welding machine according to claim 4, characterized in that devices (66, 67) are provided for removing from the slots (63) of the delivery device (60) the crosswire (26; 41) which has reached the position adjacent to the welding electrodes and for guiding it into the intermediate space between the electrodes (3, 4) of the welding machine.

Fig.1

Fig. 2

Fig. 3

Fig.4